Europäisches Patentamt

European Patent Office

Office européen des brevets

(11) Publication number: **0 147 002**
**B1**

# EUROPEAN PATENT SPECIFICATION

(45) Date of publication of patent specification: **23.11.88**

(51) Int. Cl.⁴: **G 01 N 21/87**

(21) Application number: **84304789.5**

(22) Date of filing: **13.07.84**

(54) **Device for judging the quality of precious stones.**

(30) Priority: **27.12.83 JP 205012/83 u**

(43) Date of publication of application:
**03.07.85 Bulletin 85/27**

(45) Publication of the grant of the patent:
**23.11.88 Bulletin 88/47**

(84) Designated Contracting States:
**DE FR GB**

(56) References cited:
**DE-U-1 958 962**
**DE-U-7 016 584**
**GB-A-1 403 557**

(73) Proprietor: **Yugen Kaisha J.D.M.**
**5-5 Azabudai, 3-chome Minato-ku**
**Tokyo (JP)**

(72) Inventor: **Shigetomi, Tsuyoshi**
**3002-15, Sayamagaoka, 1-chome**
**Tokorozawa-shi Saitama-ken (JP)**
Inventor: **Inoue, Kazuo**
**Room No. 1A-502 12, Utsukushigaoka, 1-chome**
**Midori-ku Yokohama-shi Kanagawa-ken (JP)**

(74) Representative: **Evershed, Michael et al**
**MARKS & CLERK Alpha Tower Suffolk Street**
**Queensway**
**Birmingham B1 ITT (GB)**

Courier Press, Leamington Spa, England.

# Description

The present invention relates to a device for judging the quality of precious stones, particularly but not exclusively diamonds, and more especially relates to a device which enables common customers who are without professional knowledge of precious stones to easily judge the grade of the stones.

The state of the art according to the preamble of claim 1 is known from DE—U—1 958 962. There a microscope is used for judging the quality of diamonds.

It is well known that the value of a diamond lies in its weight or carat, and that its cut, transparency, clarity and colour are also important factors in judging its value. Conventionally quality analyses have been made by professionals for indicating the value of a diamond. Common customers have been able only to learn how to look at and read such analyses, and it has been difficult for them to actually ascertain the quality of diamond articles with their own eyes, because such articles must be handled very carefully as, for instance, they could slip and fall when they are held by a pair of pincers. Moreover, there are many problems which are yet to be solved for creating the suitable environment to examine diamond articles such as preparing the desired light source and so on.

It is an object of this invention to provide a device for judging the quality of precious stones with relative ease.

According to this invention there is provided a device for judging the quality of precious stones comprising a body, a plate for supporting precious stones slidably mounted on the body between a window provided on the upper part of the body and a light source provided on the lower part thereof, a magnifying glass for viewing precious stones through said window and which is fixed to a base plate slidably mounted on the device body, and a disc having a small hole at its centre mounted on the object lens side of the magnifying glass, the exterior of the disc being coloured.

The device of this invention enables judgement to be made easily of the grade of cut, transparency, clarity and colour of precious stones such as diamonds when they are viewed through the magnifying glass. Moreover, with this device, diamond articles can be securely supported, and it is possible to easily compare the diamond article to be judged with a master stone. Further, the device does not require a special place, and can easily be employed at jewellery shops.

This invention will now be described in more detail, by way of example, with reference to the drawings, in which:

Figure 1 is a front view of a device for judging the quality of precious stones embodying this invention;

Figure 2 is a side view of the device of Figure 1;

Figure 3 is a view showing the principle of this invention;

Figure 4 is a plan view of a supporting plate forming part of the device of Figure 1;

Figure 5 is a plan view of another supporting plate;

Figures 6 and 7 are respective side views of the plates shown in Figures 4 and 5, each shown supporting a precious stone;

Figure 8 is a perspective view of another device embodying this invention in which the supporting plate and the magnifying glass are supported in a horizontal direction;

Figure 9 is a plan view of a supporting plate suitable for judging the colour of precious stones;

Figure 10 is a side view thereof; and

Figure 11 is a plan view of a supporting plate having conical dents.

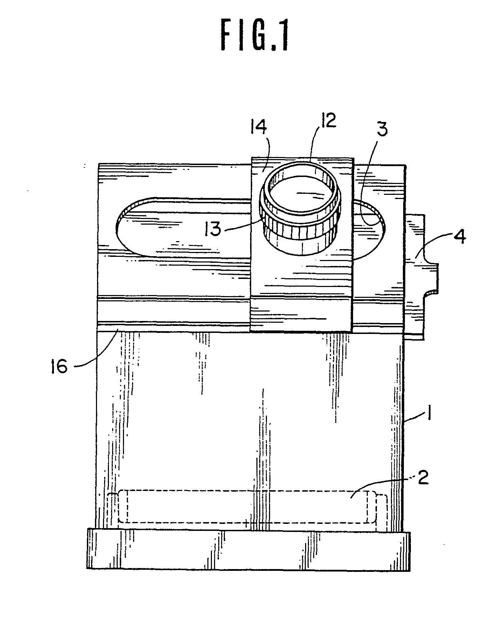

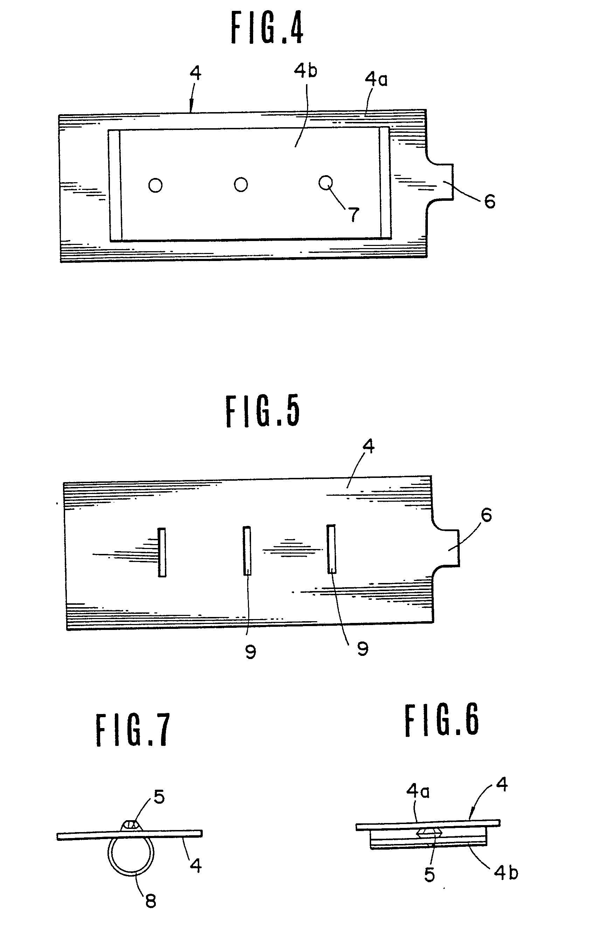

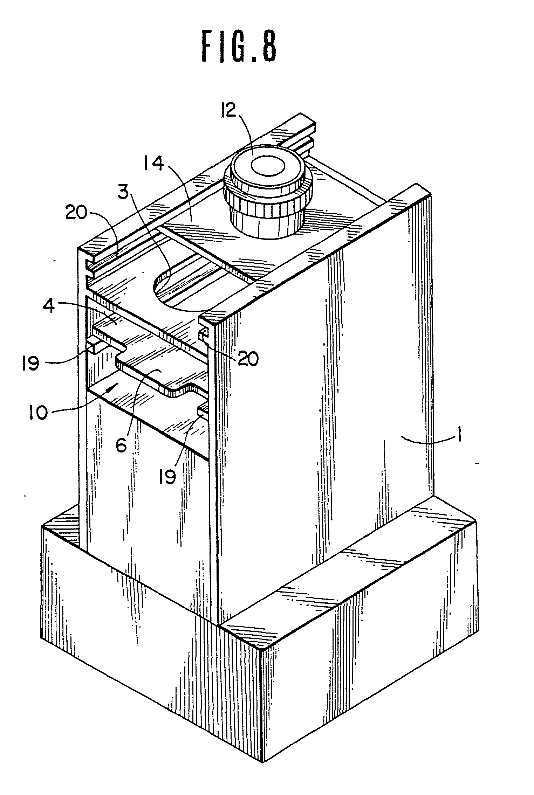

As shown in Figure 1, a device body 1 is made like a box, and it is provided with light source (fluorescent light) 2 at its lower part and an oval window 3 at its upper part. A plate 4 made of transparent glass or acrylic plate supports precious stones such as diamond. As shown in Figures 4 and 5, the plate is provided with a handle 6. The example of the supporting plate 4 shown in Figures 4 and 6 comprises two plates 4a, 4b arranged so that the tip of a diamond may be secured in a small hole 7 of the plate 4b. The example of the plate 4 in Figures 5 and 7 is arranged to support a ring 8, and a plurality of narrow slots 9 are provided for this purpose.

The supporting plate 4 is inserted in the device body 1 by placing both ends of the plate in notches 11, 11 provided at both sides of a side opening 10 provided between the window 3 and the light source 2 of the device body 1. In the present embodiment the notches are arranged in two rows one on top of the other, but it is of course not limited to this arrangement. It will be sufficient that the supporting plate 4 can slide below the window 3 for its insertion and removal.

A magnifying glass 12 is provided with a focus adjustment ring 13, and is fixed to a base plate 14 by screwing or the like. Flanges 15 on both ends of the base plate 14 are engaged in grooves 16, and the plate 14 is arranged slidable in the longitudinal direction. A disc 17 having a small hole 18 at its centre is provided on the object lens side of the magnifying glass 12. The exterior of the disc 17 is coloured in red, silver or another colour and its interior or the lens side is coloured black.

In another embodiment shown in Figure 8, the supporting plate 4 and the plate 14 to which the magnifying glass 12 is fixed are carried by the device body in the horizontal direction, but its basic structure is unchanged from the first embodiment.

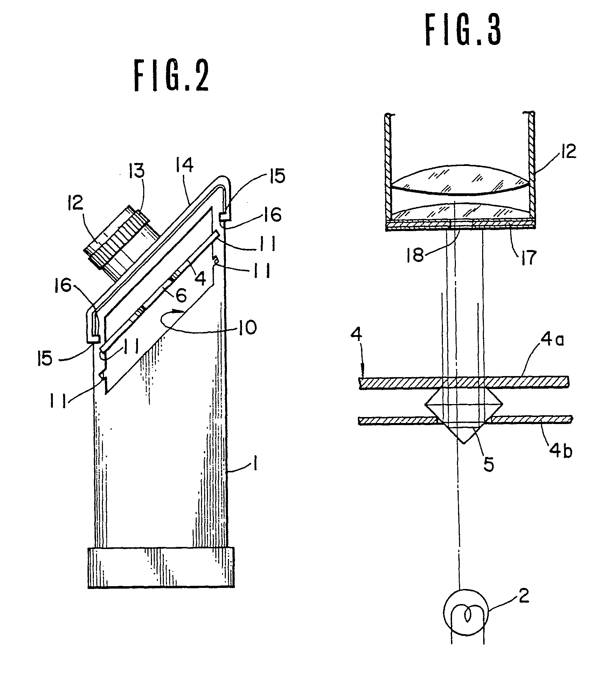

It is different from the embodiment shown in Figures 1 and 2 in that when inserting the supporting plate 4 in the opening 10 on the side of the device body 1 between the window 3 and the light source, protrusions 19 are provided in place of the notches, and sliding of the base plate 14 to which the magnifying glass 12 is fixed, above the window of the device body 1, is carried out by inserting both edges of the base plate 14 in grooves 20 provided in the device body 1.

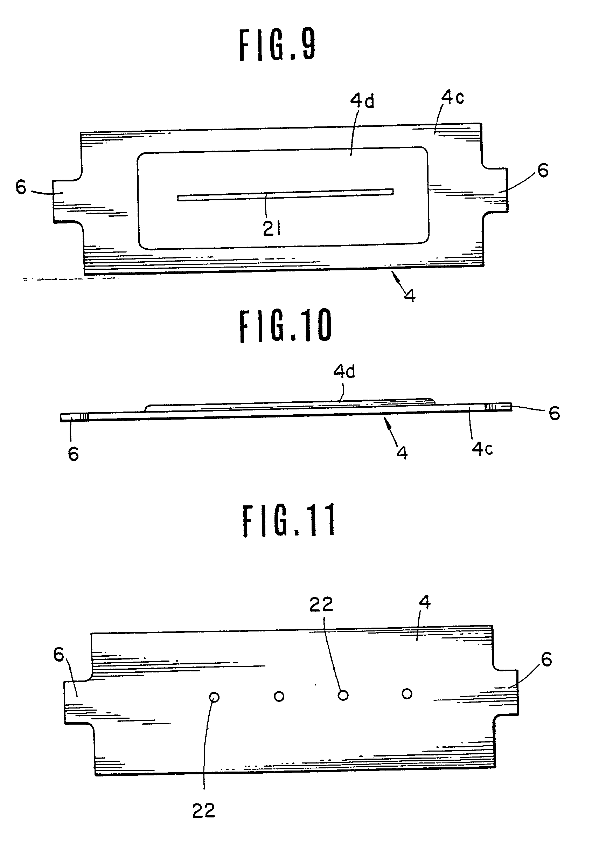

Figures 9 and 10 are a plan view and a side view respectively of a supporting plate especially suitable for judging the colour of precious stones. An upper plate 4d of white acrylic material is attached to the centre of the upper surface of the main body 4c of the supporting plate of transparent acrylic material. The upper plate 4d is provided with a horizontal groove 21 for placing a diamond article towards the side surface. The supporting plate 4 shown in Figure 11 is simply provided with a plurality of conical dents 22 so that lower tips of diamond articles can be inserted therein.

With the embodiments of the present invention as described above, when a diamond 5 is seen through the magnifying glass 12 with the light from the light source 2, the colour of the coloured part of the disc 17 is reflected onto the diamond, and the colour reflected from the diamond can be seen through the magnifying glass. In case the colour red is employed, the diamond which presents more red light has more reflecting light, and therefore it is a diamond of better brilliance. On the other hand, if more white part is seen, it means that the light from the light source 2 passes through the magnifying glass 12, as it is and thus the tested diamond can be judged as an article of inferior brilliance. The present device, thus, mainly enables examination and judgement of the quality of cut and grade of clarity. Also, if the supporting plate shown in Figure 10 and the disc which is mounted on the object lens side of the magnifying glass, whose exterior is coloured in silver is employed, the colour of diamonds can be identified.

In this case, if a plurality of diamonds are placed on the supporting plate, and the diamond to be judged is compared with the one of excellent cut and high grade clarity, it is easier to judge its quality. Particularly, when the colour of a diamond is to be judged, its grade can be determined by employing stones varying from "D"—"Z" (no colour to yellow).

As described above, the present invention enables judgement of brilliance, grades of cut, clarity and colour, respectively of precious stones especially diamonds without help of specialists, facilitating common consumers to select articles accurately and easily, and thus proving remarkably useful in sales of this kind of expensive articles.

## Claims

1. A device for judging the quality of precious stones comprising a body (1), a plate (4) for supporting precious stones (5) slidably mounted on the body (1) and a light source (2) provided on the lower part thereof, characterized in that it further comprises a window (3) provided on the upper part of the body (1) a magnifying glass (12) for viewing precious stones (5) through said window (3) which magnifying glass (12) is fixed to a base plate (14) slidably mounted on the device body (1), and a disc (17) having a small hole (18) at its centre through which light passes to the magnifying glass (12), said disk (17) being mounted on the object lens side of the magnifying glass (12), the exterior of the disc (17) being coloured.

2. A device as claimed in claim 1, characterized in that the exterior of the disc (17) is coloured red.

3. A device as claimed in claim 1, characterized in that the exterior of the disc (17) is coloured silver.

4. A device as claimed in any one of the preceding claims, characterized in that the support plate (4) is provided with a plurality of openings (7; 9; 22).

5. A device as claimed in any one of the preceding claims, characterized in that the supporting plate (4) comprises a main body (4c) formed from transparent plate and a white upper plate (4d) fixed to the centre of the main body (4c), the upper plate (4d) being provided with a horizontal groove (21).

## Patentansprüche

1. Vorrichtung zum Beurteilen der Güte eines Edelsteines, bestehend aus einem Gehäuse (1), einer Platte (4) zum Halten von Edelsteinen (5), die verschiebbar an dem Gehäuse (1) montiert ist und einer Lichtquelle (2), die am unteren Ende des Gehäuses (1) vorgesehen ist, dadurch gekennzeichnet, daß sie weiterhin ein Fenster (3) aufweist, das am oberen Ende des Gehäuses (1) vorgesehen ist, sowie ein Vergrößerungsglas (12) zur Betrachtung des Edelsteines (5) durch das Fenster (3), wobei das Vergrößerungsglas (12) mit einer Basisplatte (14) verbunden ist, die verschiebbar auf dem Vorrichtungsgehäuse (1) montiert ist, und eine Scheibe (17), die ein kleines Loch (19) in ihrer Mitte aufweist, durch das Licht auf das Vergrößerungsglas (12) fällt, wobei diese Scheibe (17) auf der Seite der Objektivlinse des Vergrößerungsglases (12) montiert ist und die Scheibe (17) äußerlich gefärbt ist.

2. Vorrichtung nach Anspruch 1, dadurch gekennzeichnet, daß die Scheibe (17) äußerlich rot gefärbt ist.

3. Vorrichtung nach Anspruch 1, dadurch gekennzeichnet, daß die Scheibe (17) äußerlich silbern gefärbt ist.

4. Vorrichtung nach einem der vorhergehenden Ansprüche, dadurch gekennzeichnet, daß die Halteplatte (4) mit mehreren Öffnungen (7, 9, 22) versehen ist.

5. Vorrichtung nach einem der vorhergehenden Ansprüche, dadurch gekennzeichnet, daß die Halteplatte (4) einen Hauptkörper (4c) aus einer transparenten Platte aufweist, sowie eine weiße obere Platte (4d), die mittig auf dem Hauptkörper (4c) befestigt ist, wobei die obere Platte (4d) eine horizontale Rinne (21) aufweist.

**Revendications**

1. Dispositif pour évaluer la qualité des pierres précieuses, comprenant un corps (1), une plaque (4) destinée à supporter les pierres précieuses (5), montée pour coulisser sur le corps (1), et une source de lumière (2) prévue sur la partie inférieure de ce corps, caractérisé en ce qu'il comprend en outre une fenêtre (3) prévue sur la partie supérieure du corps (1), une loupe (12) servant à observer des pierres précieuses (5) à travers ladite fenêtre, laquelle loupe (12) est fixée à une plaque de base (14) montée pour coulisser sur le corps (1) du dispositif, et un disque (17) présentant en son centre un petit trou (18) à travers lequel la lumière atteint la loupe (12), ledit disque (17) étant monté sur le côté objectif de la loupe (12), l'extérieure du disque (17) étant coloré.

2. Dispositif selon la revendication 1, caractérisé en ce que l'extérieur du disque (17) est coloré en rouge.

3. Dispositif selon la revendication 1, caractérisé en ce que l'extérieur du disque (17) est coloré en argent.

4. Dispositif selon une quelconque des revendications précédentes, caractérisé en ce que la plaque support (14) est munie d'une pluralité d'ouvertures (7; 9; 22).

5. Dispositif selon une quelconque des revendications précédentes, caractérisé en ce que la plaque support (4) comprend un corps principal (4c) fait d'une plaque transparente, et une plaque supérieure blanche (4d) fixée au centre du corps principal (4c), la plaque supérieure (4d) étant munie d'une rainure horizontale (21).

# F I G.1

FIG.3

FIG.2

# FIG.4

# FIG.5

# FIG.7

# FIG.6

# FIG.8

# FIG.9

# FIG.10

# FIG.11